# EUROPÄISCHE PATENTSCHRIFT

(11) **EP 4 592 784 B1**
(45) Veröffentlichungstag und Bekanntmachung des Hinweises auf die Patenterteilung: **14.10.2026**
(21) Anmeldenummer: 25170313.8
(22) Anmeldetag: 23.07.2021
(51) Int. Cl.: G05D 1/00

(54) **BODENREINIGUNGSSYSTEM, BODENREINIGUNGSGERÄT UND VERFAHREN ZUM BETREIBEN EINES BODENREINIGUNGSSYSTEMS ODER EINES BODENREINIGUNGSGERÄTES**
FLOOR CLEANING SYSTEM, FLOOR CLEANING DEVICE AND METHOD FOR OPERATING A FLOOR CLEANING SYSTEM OR A FLOOR CLEANING DEVICE
SYSTÈME DE NETTOYAGE DE SOL, APPAREIL DE NETTOYAGE DE SOL ET PROCÉDÉ DE FONCTIONNEMENT D'UN SYSTÈME DE NETTOYAGE DE SOL OU D'UN APPAREIL DE NETTOYAGE DE SOL

(43) Veröffentlichungstag der Anmeldung: 30.07.2025
(62) Dokumentnummer(n) der früheren Anmeldung(en) nach Art. 76 EPÜ: 21749171.1 / 4 374 237
(73) Patentinhaber: Alfred Kärcher SE & Co. KG, 71364 Winnenden (DE)
(72) Erfinder: HÖNNIGE, Heiko, 71364 Winnenden (DE); EHRENTREICH, Thilo, 71364 Winnenden (DE); PRASSER, Patrick, 71364 Winnenden (DE); DRUST, Manuel, 71364 Winnenden (DE); GARCIA LOPEZ, Felipe, 71364 Winnenden (DE); SCHURIG, Fabian, 80939 München (DE); HINZ, Gereon, 80939 München (DE)
(74) Vertreter: DTS Patent- und Rechtsanwälte PartmbB

(56) Entgegenhaltungen:
- EP-A1- 3 832 418
- US-A1- 2018 281 191
- US-A1- 2019 167 059

## Beschreibung

Die vorliegende Erfindung betrifft ein Bodenreinigungssystem, umfassend ein selbstfahrendes und selbstlenkendes Bodenreinigungsgerät zum Reinigen einer Bodenfläche, mindestens eine ansteuerbare Anzeigeeinheit, und mindestens eine Speichereinheit, wobei das Bodenreinigungsgerät ein Fahrwerk zum Verfahren auf einer Bodenfläche, eine Steuereinheit, eine Sensoreinheit, mindestens eine Reinigungseinheit und eine Bedieneinheit umfasst, wobei mittels der Sensoreinheit eine Umgebung zum Lokalisieren und/oder Navigieren des Bodenreinigungsgerätes erfassbar ist, insbesondere während der Bewegung, wobei in der mindestens einen Speichereinheit mindestens ein Reinigungspfad auf der Bodenfläche speicherbar oder gespeichert ist, wobei das Bodenreinigungsgerät ausgebildet und eingerichtet ist, unter Führung einer Bedienperson an der Bedieneinheit in einem Einlern-Betriebsmodus einen in der Speichereinheit speicherbaren Reinigungspfad zu erstellen.

Außerdem betrifft die vorliegende Erfindung ein Verfahren zum Betreiben eines Bodenreinigungssystems und ein Bodenreinigungsgerät.

Mit dem Bodenreinigungsgerät des eingangs genannten Bodenreinigungssystems kann eine autonome Reinigung der Bodenfläche durchgeführt werden. Unter Ansteuerung durch die Steuereinheit kann das Bodenreinigungsgerät über die Bodenfläche verfahren und Schmutz mittels der mindestens einen Reinigungseinheit ablösen. Vorgesehen sein kann, dass Reinigungsflüssigkeit aus einem Vorratsbehälter die Bodenfläche zur Steigerung der Reinigungsleistung benetzt. Die mindestens eine Reinigungseinheit kann zum Beispiel eine Reinigungswalze oder eine Tellerbürste umfassen. Das Gemisch aus Schmutz und Reinigungsflüssigkeit kann beispielsweise über eine Saugleiste von der Bodenfläche aufgenommen und in einen Schmutzflüssigkeitsbehälter überführt werden.

Bekannt ist es, dass autonome Bodenreinigungsgeräte zuvor gespeicherte Reinigungspfade abfahren können. Der Reinigungspfad wird unter Führung des Bodenreinigungsgerätes durch eine Bedienperson in einem Einlern-Betriebsmodus eingelernt (auch als Teach-In bezeichnet) und abgespeichert. Zur Lokalisation und/oder Navigation kann das Bodenreinigungsgerät unter Nutzung mindestens eines Signals der Sensoreinheit die Umgebung erfassen. Auf diese Weise kann das Bodenreinigungsgerät die im Einlern-Betriebsmodus abgespeicherten Fahrwege bei einem späteren Reinigungsvorgang in der Umgebung auffinden und abfahren.

Die US 2018/0281191 A1 beschreibt eine robotergestützte Bahnplanung, in der ein autonomes Bodenreinigungsgerät eine Kostenkarte erzeugen kann, die mit einer Umgebung des Bodenreinigungsgerätes in Bezug steht.

In der US 2012/0288936 A1 und in der EP 3 832 418 A1 sind autonome Bodenreinigungsgeräte mit einem Einlern-Betriebsmodus beschrieben.

Ein weiteres autonomes Bodenreinigungsgerät ist in der US 2019/0167059 A1 gezeigt, bei der das Bodenreinigungsgerät mittels eines Smartphones steuerbar ist.

Aufgabe der vorliegenden Erfindung ist es, ein Bodenreinigungssystem, ein Bodenreinigungsgerät und ein Verfahren zum Betreiben eines Bodenreinigungssystems bereitzustellen, mit dem Reinigungspfade insbesondere im Hinblick auf eine Kontrolle des Reinigungsergebnisses mit zusätzlichen Informationen versehen werden können.

Diese Aufgabe wird durch ein erfindungsgemäßes Bodenreinigungssystem mit den Merkmalen von Anspruch 1 und durch ein erfindungsgemäßes Verfahren mit den Merkmalen von Anspruch 17 gelöst.

Bei dem erfindungsgemäßen Bodenreinigungssystem ist über das mindestens eine Reinigungsereignis und/oder das mindestens eine Interaktionsereignis zusätzliche Information im Reinigungspfad speicherbar (beispielsweise beim Einlernen) oder gespeichert (beispielsweise bei zuvor angelegtem Reinigungspfad). Über bloße Fahrtrichtungen und Fahrtrichtungsänderungen hinaus weist der Reinigungspfad beim erfindungsgemäßen Bodenreinigungssystem zusätzliche Informationen auf, die sich auf die Reinigung und/oder auf die Interaktion beziehen. Die zusätzlichen Informationen können positionsbezogen im Reinigungspfad an der mindestens einen Anzeigeeinheit dargestellt werden. Auf diese Weise kann die Bedienperson nicht nur feststellen, wo sich das Bodenreinigungsgerät befindet bzw. befunden hat, sondern auch welchen Zustand es in Bezug auf Reinigung und/oder Interaktion einnimmt oder eingenommen hat.

Vorgesehen sein kann, dass ein gespeicherter Reinigungspfad nicht über das Bodenreinigungsgerät eingelernt wurde, sondern von einer Bedienperson anderweitig in der Speichereinheit hinterlegt wurde. Zum Beispiel kann der Reinigungspfad extern von einer Bedienperson erstellt und in der Speichereinheit gespeichert werden. Beispielsweise wird eine flächendeckende Planung der Reinigung als Grundlage für die Erstellung des Reinigungspfades herangezogen.

Der Reinigungspfad kann zum Beispiel zur Erstellung vollständig abgefahren und räumlich entfernt vorgezeichnet werden. Alternativ oder ergänzend kann vorgesehen sein, dass der Reinigungspfad teilweise abgefahren und teilweise rechnerisch auf der Grundlage des Fahrwegs erstellt wird, zum Beispiel beim Füllen umfahrener Flächen. Eine derartige semiautomatische Erstellung ist in der US 2012/0288936 A1 beschrieben.

Günstig kann es sein, wenn der Reinigungspfad während der Führung des Bodenreinigungsgerätes durch die Bedienperson im Einlern-Betriebsmodus an der mindestens einen Anzeigeeinheit darstellbar ist, insbesondere verknüpft mit dem mindestens einen Reinigungsereignis und/oder dem mindestens einen Interaktionsereignis. Dadurch hat die Bedienperson bereits während des Einlern-Betriebsmodus die Möglichkeit der visuellen Überprüfung des Fahrweges des Bodenreinigungsgerätes und etwaiger Ereignisse.

Vorzugsweise umfasst die Bedieneinheit mindestens ein Bedienelement zum Auslösen des mindestens einen Reinigungsereignisses und/oder des mindestens einen Interaktionsereignisses durch die Bedienperson im Einlern-Betriebsmodus. Während des Einlern-Betriebsmodus kann die Bedienperson, um das gewünschte Ereignis auszulösen, das Bedienelement betätigen. Ein entsprechendes Ereignis kann positionsbezogen im Reinigungspfad gespeichert werden.

An der mindestens einen Anzeigeeinheit ist vorzugsweise eine Karte der Umgebung darstellbar, die anhand mindestens eines Signals der Sensoreinrichtung beispielsweise von der Steuereinrichtung erstellt werden kann. Günstigerweise ist der Reinigungspfad in der Karte darstellbar, bevorzugt während des Einlern-Betriebsmodus. Dies bietet der Bedienperson die Möglichkeit zu erkennen und zu kontrollieren, welche Abschnitte der Bodenfläche bereits befahren wurden und welche Abschnitte erforderlichenfalls zur Vervollständigung des Reinigungspfades noch zu befahren sind.

Die Darstellung des Reinigungspfades beim Einlern-Betriebsmodus innerhalb der Karte vereinfacht es der Bedienperson, das Bodenreinigungsgerät effizient zu führen. Beispielsweise wird es der Bedienperson erleichtert, das Bodenreinigungsgerät randnah oder hindernisnah über die Bodenfläche zu führen. Parallele Bahnen bei zum Beispiel mäanderförmiger oder spiralförmiger Bewegung können durch die visuelle Unterstützung von der Bedienperson leichter und zugleich mit möglichst geringer Überlappung benachbarter Bahnen abgefahren werden.

Vorgesehen sein kann, dass die Umgebung beim Einlern-Betriebsmodus überwacht wird und an die Bedienperson Hinweise zum Führen des Bodenreinigungsgerätes ausgegeben werden, zum Beispiel beim Einfahren in Engstellen. Die Hinweise können optisch und/oder akustisch sein.

Vorgesehen sein kann, dass ein eingelernter Reinigungspfad in einem nachfolgenden Optimierungsschritt, beispielsweise von der Steuereinheit, optimiert werden kann, wobei der optimierte Reinigungspfad der späteren selbsttätigen Abarbeitung durch das Bodenreinigungsgerät zugrunde gelegt wird. Bei der Optimierung werden beispielsweise Anpassungen im Hinblick auf Kollisionsvermeidungen, Sicherheitsanforderungen, parallelen Verlauf benachbarter Bahnen, randnahe Reinigung, Vermeidung von unplausiblen oder redundanten Bewegungen und/oder eines andersartigen Kriteriums vorgenommen.

Das mindestens eine Reinigungsereignis kann bei einer bevorzugten Ausführungsform der Erfindung beispielsweise zumindest eines der Folgenden sein:
- Einschalten oder Ausschalten eines Reinigungsbetriebs;
- Einschalten, Ausschalten und/oder Ändern des Betriebszustandes mindestens einer Reinigungseinheit;
- Einstellen einer Dosierung einer Reinigungsflüssigkeit und/oder einer Reinigungschemikalie;
- eine Verfahrgeschwindigkeit des Bodenreinigungsgerätes auf der Bodenfläche, insbesondere während der Reinigung der Bodenfläche.

Das Bodenreinigungsgerät umfasst vorzugsweise eine Hinweiseinheit mit einem optischen Aktor und/oder einem akustischen Aktor, wobei das mindestens eine Interaktionsereignis die Ausgabe eines Hinweises über den optischen Aktor und/oder den akustischen Aktor umfasst. Beispielsweise sind als Aktoren eine Signalleuchte, ein Blinklicht, ein Lautsprecher und/oder eine Hupe vorgesehen. Über den mindestens einen Aktor kann das Bodenreinigungsgerät mit der Umgebung, insbesondere Personen, interagieren. Die Umgebung kann beispielsweise optisch und/oder akustisch auf das Bodenreinigungsgerät aufmerksam gemacht werden. Dies ist vorzugsweise auch dann möglich, wenn keine Personen vom Bodenreinigungsgerät in der Umgebung erfasst werden.

Von Vorteil ist es, wenn der Reinigungspfad bei einem und/oder nach Abschluss eines vom Bodenreinigungsgerät selbsttätig durchgeführten Reinigungsvorgangs unter Abfahren eines zuvor gespeicherten Reinigungspfades darstellbar ist, insbesondere verknüpft mit dem mindestens einen Reinigungsereignis und/oder dem mindestens einen Interaktionsereignis. Dies gibt die Möglichkeit, noch während der autonomen Bearbeitung oder nach deren Abschluss eine Kontrolle des abgefahrenen Reinigungspfades vorzunehmen, im Hinblick auf eine Kontrolle des Reinigungsergebnisses.

Beispielsweise ist nach Abschluss des Reinigungsvorgangs ein Reinigungsbericht erstellbar und in der mindestens einen Speichereinheit speicherbar, wobei der Reinigungspfad Bestandteil des Reinigungsbericht ist, insbesondere verknüpft mit dem mindestens einen Reinigungsereignis und/oder dem mindestens einen Interaktionsereignis.

Von Vorteil ist es, dass von der Steuereinheit ein zuvor gespeicherter Reinigungspfad zusammen mit dem bei dem Reinigungsvorgang tatsächlich absolvierten Reinigungspfad darstellbar ist. Hierbei ist vorgesehen, dass etwaige Abweichungen zwischen den Reinigungspfaden an der Anzeigeeinheit visualisierbar sind. Auf diese Weise lassen sich zum Beispiel Ausweichmanöver des Bodenreinigungsgerätes aufgrund von Hindernissen erkennen. Abweichungen zwischen den Reinigungspfaden können zum Beispiel auf einen minderwertig eingelernten Reinigungspfad hindeuten, auf eine Änderung der Position von Hindernissen an oder auf der Bodenfläche und/oder auf eine unzureichende Kalibrierung der Sensoreinheit.

Von Vorteil ist es, wenn von der Steuereinheit eine Übereinstimmung des tatsächlich absolvierten Reinigungspfades mit dem zuvor gespeicherten Reinigungspfad berechenbar ist. Dies gibt die Möglichkeit, eine Flächenüberdeckung (Coverage) zu ermitteln und festzustellen, in welchem Ausmaß die erwünschte Reinigungsleistung durch Abfahren des Reinigungspfades tatsächlich erbracht werden konnte.

Die Darstellung des mindestens einen Reinigungsereignisses und/oder Interaktionsereignisses an der Anzeigeeinheit kann auf verschiedenartige Weise erfolgen. Beispielsweise werden Ereignisse zum Zeitpunkt ihres Auftretens über ein Markerelement an oder neben dem Pfad gekennzeichnet. Optional kann eine Erläuterung vorgesehen sein, um welche Art Ereignis es sich handelt. Das Ereignis kann beispielsweise für die Dauer seines Auftretens als Einfärbung oder Hervorhebung des Fahrwegs des Reinigungspfades angezeigt werden.

Der Reinigungspfad ist an der Anzeigeeinheit vorzugsweise derart darstellbar, dass das mindestens eine Reinigungsereignis und/oder das mindestens eine Interaktionsereignis wahlweise anzeigbar ist. Hierunter kann vorliegend insbesondere verstanden werden, dass die Bedienperson auswählen kann, ob und gegebenenfalls welches Reinigungsereignis und/oder Interaktionsereignis an der Anzeigeeinheit dargestellt ist. Beispielsweise kann an der Anzeigeeinheit eine Mehrzahl von virtuellen Schichten (Layern) angezeigt werden, die jeweils Informationen über mindestens ein Ereignis umfassen. Es kann vorgesehen sein, dass die Bedienperson gezielt die Inhalte von einem Layer oder mehreren Layern anzeigen lassen kann.

Günstig kann es sein, wenn der Reinigungspfad an der Anzeigeeinheit derart darstellbar ist, dass zumindest eines der Folgenden hervorgehoben ist:
- ein Abschnitt des Reinigungspfades, entlang dem ein Reinigungsbetrieb durchgeführt wird oder wurde;
- ein Abschnitt des Reinigungspfades, entlang dem mindestens eine Reinigungseinheit in Betrieb ist oder war.

Die Hervorhebung kann zum Beispiel durch eine Einfärbung des Fahrwegs des Reinigungspfades erfolgen.

Vorteilhaft kann es sein, wenn der Reinigungspfad an der Anzeigeeinheit derart darstellbar ist, dass ein von der mindestens einen Reinigungseinheit erfasster Bereich der Bodenfläche hervorgehoben ist, wobei die Hervorhebung zum Beispiel durch eine Einfärbung erfolgen kann. Beispielsweise kann anhand der ermittelten Positionsinformation und bekannter Erstreckung der mindestens einen Reinigungseinheit ermittelt werden, welcher Bereich der Bodenfläche von der Reinigungseinheit erfasst wurde. Dies kann der Bedienperson visualisiert werden, um das Einlernen des Reinigungspfades zu erleichtern und/oder festzustellen, welche Bereiche der Bodenfläche bereits gereinigt oder noch nicht gereinigt wurden.

Die mindestens eine Anzeigeeinheit ist beispielsweise eine berührungssensitive Anzeigeeinheit. Vorgesehen sein kann zum Beispiel ein berührungssensitiver Bildschirm (Touchscreen). Über die berührungssensitive Anzeigeeinheit kann die Bedienperson vorzugsweise Eingaben tätigen. Bedienelemente können beispielsweise als sogenannte "Softkeys" umgesetzt sein.

Vorgesehen sein kann eine Gestensteuerung an der berührungssensitiven Anzeigeeinheit. Dies erweist sich zum Beispiel dann als vorteilhaft, wenn der Reinigungspfad an der Anzeigeeinheit vergrößerbar und/oder verkleinerbar darstellbar ist.

Vorgesehen sein kann, dass das Bodenreinigungsgerät mindestens eine Anzeigeeinheit umfasst, die vorzugsweise an der Bedieneinheit angeordnet ist und beispielsweise einen Teil der Bedieneinheit oder die Bedieneinheit insgesamt ausbilden kann.

Bei einer bevorzugten Ausführungsform der Erfindung kann vorgesehen sein, dass mindestens eine Anzeigeeinheit räumlich entfernt vom Bodenreinigungsgerät positioniert ist, wobei Bildinformationen vom Bodenreinigungsgerät über eine Kommunikationseinheit an die Anzeigeeinheit übertragbar sind. Auf diese Weise besteht die Möglichkeit, insbesondere nach selbsttätiger Reinigung zum Beispiel in einer räumlich entfernten Fernwarte, eine Kontrolle des Reinigungsergebnisses vorzugnehmen.

Beispielsweise umfasst das Bodenreinigungssystem eine Datenverarbeitungseinrichtung, die die Anzeigeeinheit aufweist. Die Datenverarbeitungseinrichtung kann zentral ausgebildet sein oder räumlich verteilt, zum Beispiel über einen Cloud-Dienst.

Vorgesehen sein kann, dass das Bodenreinigungsgerät mindestens eine Speichereinheit umfasst. Reinigungspfade können auf diese Weise lokal im Bodenreinigungsgerät gespeichert werden.

Bei einer bevorzugten Ausführungsform der Erfindung kann vorgesehen sein, dass mindestens eine Speichereinheit räumlich entfernt vom Bodenreinigungsgerät positioniert ist, wobei zu speichernde oder gespeicherte Informationen über eine Kommunikationseinheit vom Bodenreinigungsgerät an die Speichereinheit und/oder umgekehrt übertragbar sind. Die räumlich vom Bodenreinigungsgerät entfernte Speicherung erlaubt es zum Beispiel, auf technisch einfache Weise Reinigungspfade durch verschiedene Bodenreinigungsgeräte durchführen zu lassen, wobei hierzu die Reinigungspfade nicht in mehreren Bodenreinigungsgeräten gespeichert werden müssen. Dies ist zum Beispiel vorteilhaft bei Einsatzwechseln, Wartungen und/oder Störungen von Bodenreinigungsgeräten.

Vorgesehen sein kann, dass das Bodenreinigungssystem eine Datenverarbeitungseinrichtung umfasst (zentral und/oder als Cloud-Dienst), die die Speichereinheit aufweist.

Das Bodenreinigungsgerät kann bei einer bevorzugten Ausführungsform der Erfindung als Scheuersaugmaschine ausgestaltet sein.

Die Erfindung betrifft auch ein erfindungsgemäßes Bodenreinigungsgerät, das ein Bodenreinigungsgerät eines Bodenreinigungssystems der vorstehend beschriebenen Art ist. Vorteilhafte Ausführungsformen des erfindungsgemäßen Bodenreinigungsgerätes ergeben sich durch die voranstehenden Erläuterungen.

Wie eingangs erwähnt, betrifft die vorliegende Erfindung auch ein Verfahren. Ein erfindungsgemäßes Verfahren umfasst, wie erwähnt, die Merkmale von Anspruch 17.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine perspektivische Darstellung eines erfindungsgemäßen Bodenreinigungsgerätes;
- Figur 2:: eine Rückansicht des Bodenreinigungsgerätes aus Figur 1;
- Figur 3:: eine vergrößerte Darstellung einer Anzeigeeinheit des Bodenreinigungsgerätes in einem Einlern-Betriebsmodus;
- Figur 4:: eine Darstellung entsprechend Figur 3 mit andersartigen Anzeigeinhalt der Anzeigeeinheit;
- Figur 5:: eine weitere Darstellung der Anzeigeeinheit des Bodenreinigungsgerätes, nach Abschluss eines Reinigungsvorgangs;
- Figur 6:: eine vergrößerte Darstellung des Anzeigeinhalts aus Figur 5;
- Figuren 7 bis 9:: weitere vergrößerte Darstellungen des Anzeigeinhalts; und
- Figur 10:: ein erfindungsgemäßes Bodenreinigungssystem, umfassend das Bodenreinigungsgerät.

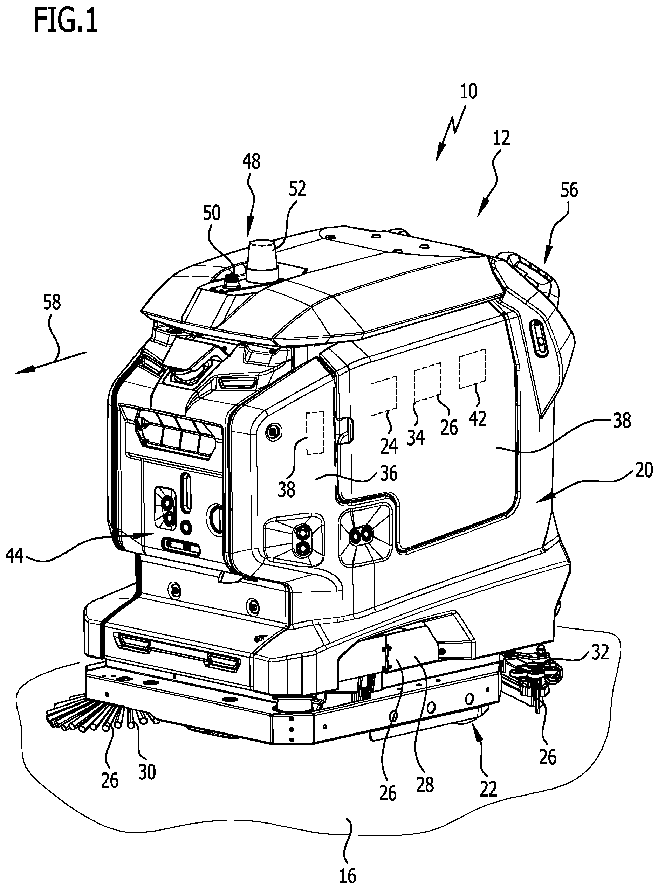

Figur 1 zeigt eine insgesamt mit dem Bezugszeichen 10 belegte vorteilhafte Ausführungsform eines erfindungsgemäßen Bodenreinigungsgerätes. Das Bodenreinigungsgerät 10 kann für sich alleine ein erfindungsgemäßes Bodenreinigungssystem in bevorzugter Ausführungsform ausbilden, gekennzeichnet mit dem Bezugszeichen 12.

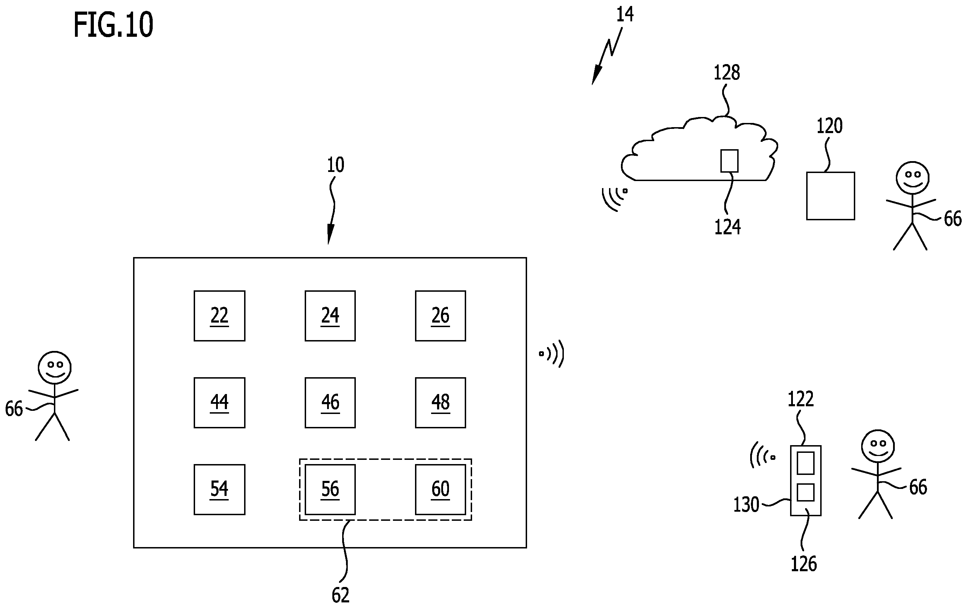

Alternativ oder ergänzend kann das Bodenreinigungsgerät 10 Bestandteil eines weiteren, in Figur 10 schematisch dargestellten erfindungsgemäßen Bodenreinigungssystems 14 in bevorzugter Ausführungsform sein.

Das Bodenreinigungsgerät 10 ist selbstfahrend und selbstlenkend ausgestaltet und bildet insbesondere einen Reinigungsroboter. Mit dem Bodenreinigungsgerät 10 kann eine autonome Reinigung einer Bodenfläche 16 innerhalb einer Umgebung 18 durchgeführt werden. Dabei besteht insbesondere die Möglichkeit, mit dem Bodenreinigungsgerät 10 zuvor abgespeicherte Reinigungspfade entlangzufahren und die Bodenfläche 16 zu reinigen. Die Reinigungspfade können durch einen Einlern-Betriebsmodus (Teach-In) eingelernt werden oder vorgegeben werden.

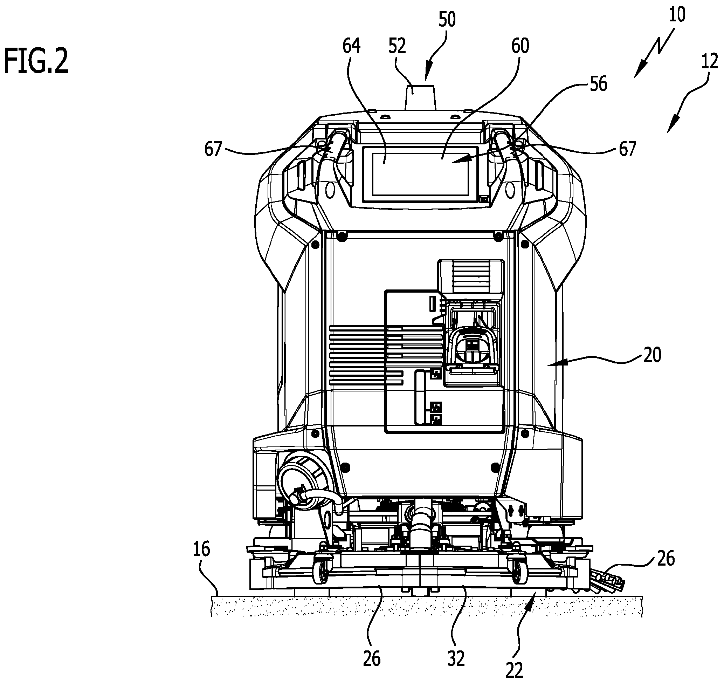

Wie insbesondere aus den Figuren 1, 2 und 10 hervorgeht, umfasst das Bodenreinigungsgerät 10 ein Gehäuse 20, an dem untenseitig ein Fahrwerk 22 angeordnet ist.

Positions- und Orientierungsangaben beziehen sich auf einen bestimmungsgemäßen Gebrauch des Bodenreinigungsgerätes 10, bei dem dieses über das Fahrwerk 22 auf der Bodenfläche 16 aufstehen kann.

Zur Steuerung sämtlicher Vorgänge umfasst das Bodenreinigungsgerät eine Steuereinheit 10. Zum Reinigen der Bodenfläche 16 umfasst das Bodenreinigungsgerät 10 Reinigungseinheiten 26. Die Reinigungseinheiten 26 umfassen im vorliegenden Beispiel einen Bodenreinigungskopf 28 mit in der Zeichnung nicht dargestellten Walzenbürsten, einen Seitenbesen 30, eine Saugleiste 32 und ein Saugaggregat 34 zum Beaufschlagen der Saugleiste 32 mit Unterdruck.

Das Bodenreinigungsgerät 10 umfasst einen Vorratsbehälter 36 für eine Reinigungsflüssigkeit, insbesondere Wasser, sowie einen Vorratsbehälter 38 für eine Reinigungschemikalie.

Die Bodenfläche 16 wird mit dem Gemisch aus Wasser und der Reinigungschemikalie benetzt. Der Schmutz wird mittels der Reinigungseinheiten 26 abgelöst und, über die Saugleiste 32 und unter der Wirkung des Saugaggregates 34, in einen Schmutzflüssigkeitsbehälter 40 überführt.

Zur Energieversorgung umfasst das Bodenreinigungsgerät 10 eine wiederaufladbare insbesondere elektrische Batterie 42.

Weiter umfasst das Bodenreinigungsgerät 10 eine Sensoreinheit 44, die zum Beispiel mindestens ein Stereokamerasystem, ein Lidarsystem und/oder ein Ultraschallsystem umfassen kann. Anhand mindestens eines Signals der Sensoreinheit 44 kann die Steuereinheit 24 das Bodenreinigungsgerät 10 in seiner Umgebung 18 lokalisieren und/oder navigieren.

Das Bodenreinigungsgerät 10 umfasst ferner eine Speichereinheit 46. In der Speichereinheit 46 können insbesondere mehrere Reinigungspfade gespeichert sein und darin abgespeichert werden.

Das Bodenreinigungsgerät 10 umfasst ferner eine Hinweiseinheit 48. Die Hinweiseinheit umfasst im vorliegenden Fall mindestens einen akustischen Aktor 50, beispielsweise ausgestaltet als Hupe oder Lautsprecher, und mindestens einen optischen Aktor 52, beispielsweise ausgestaltet als Blinklicht.

Über die Hinweiseinheit 48 kann das Bodenreinigungsgerät 10 mit der Umgebung interagieren. Hierunter kann vorliegend insbesondere verstanden werden, dass über die Aktoren 50 und/oder 52 akustische und/oder optische Hinweise ausgegeben werden, die insbesondere an Personen gerichtet sind.

Ferner umfasst das Bodenreinigungsgerät 10 eine Kommunikationseinheit 54, über die kabellos und/oder kabelgebunden Informationen vom Bodenreinigungsgerät 10 und an das Bodenreinigungsgerät 10 übertragen werden können.

Außerdem weist das Bodenreinigungsgerät 10 eine Bedieneinheit 56 auf, die bezogen auf eine Vorwärtsrichtung 58 an der Rückseite angeordnet ist. Eine ansteuerbare Anzeigeeinheit 60 ist vorgesehen, die Bestandteil der Bedieneinheit 56 sein kann oder diese zumindest teilweise ausbilden kann. Dies ist in Figur 10 schematisch durch eine gestrichelte Linie 62 gekennzeichnet.

Die Anzeigeeinheit 60 ist im vorliegenden Fall berührungssensitiv ausgestaltet und insbesondere ein Touchscreen 64 mit Bildanzeige, die vorzugsweise farbig ist. Der Touchscreen 64 erlaubt die Entgegennahme von Eingaben des Benutzers und unterstützt vorzugsweise Gestensteuerung.

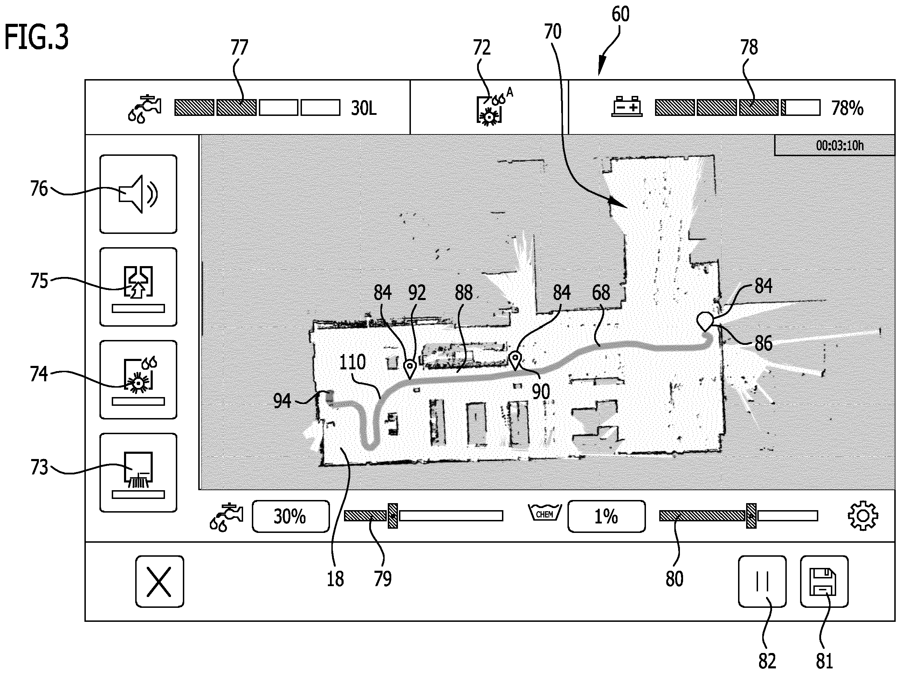

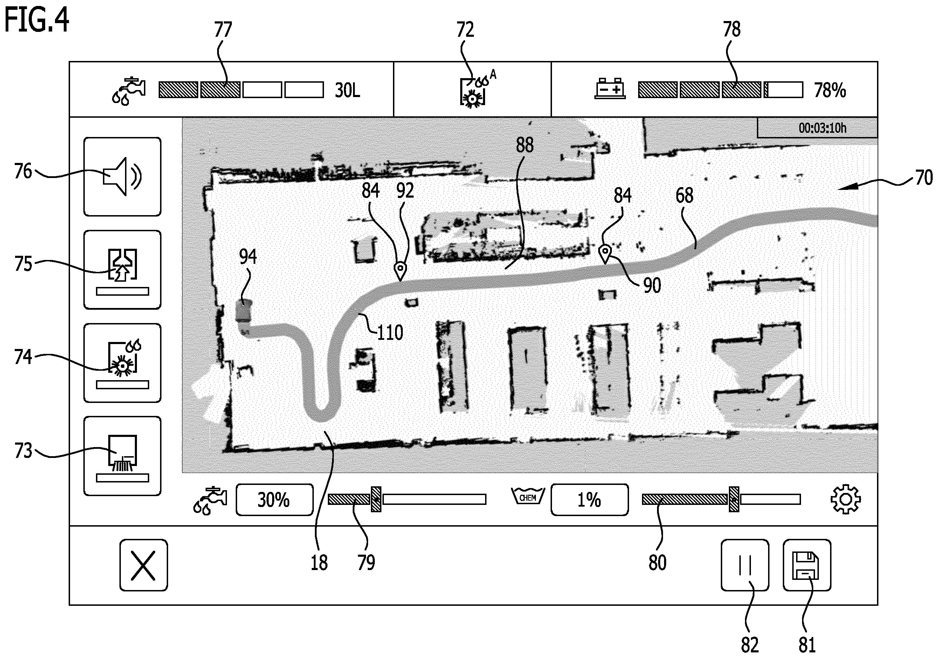

Die Figuren 3 und 4 zeigen den Bildinhalt der Anzeigeeinheit 60, während eine Bedienperson 66 das Bodenreinigungsgerät 10 in einem Einlern-Betriebsmodus betreibt. Ziel des Einlernens ist es, einen Reinigungspfad 68 innerhalb der Umgebung 18 zu erstellen, der in der Speichereinheit 46 gespeichert und vom Bodenreinigungsgerät 10 zu einem späteren Zeitpunkt selbsttätig zur Durchführung einer Reinigung der Bodenfläche 16 abgefahren kann.

Beim Einlernen kann die Bedienperson 66 das Bodenreinigungsgerät 10 über Griffelemente 67 der Bedieneinheit 56 führen. Auf das Fahrwerk 62 kann über an den Griffelementen 67 angeordnete Fahrhebel eingewirkt werden.

Die Figuren 3 und 4 zeigen eine vom Bodenreinigungsgerät 10 während des Einlernens selbsttätig erstellte Karte 70 der Umgebung 18, wobei ein Kartenausschnitt in Figur 4 gegenüber der Darstellung gemäß Figur 3 vom Benutzer vergrößert wurde.

An der Anzeigeeinheit 60 ist ferner ein Bedienelement 72 zur Auswahl eines Reinigungsmodus dargestellt, ein Bedienelement 73 zum Einschalten/Ausschalten des Seitenbesens 30, ein Bedienelement 74 zum Einschalten/Ausschalten des Bodenreinigungskopfes 28, ein Bedienelement 75 zum Einschalten/Ausschalten des Saugaggregates 34 und ein Bedienelement 76 zum Einschalten/Ausschalten der Hinweiseinheit 48.

Ferner sind an der Anzeigeeinheit 60 ein Anzeigeelement 77 zum Anzeigen des Wasservorrats, ein Anzeigeelement 78 zum Anzeigen der Batteriekapazität, ein Anzeigeelement 79 zum Anzeigen der Dosierung von Wasser und ein Anzeigeelement 80 zum Anzeigen der Dosierung der Reinigungschemikalie dargestellt.

Über ein Betätigungselement 81 kann der Reinigungspfad 68 gespeichert werden. Über ein Betätigungselement 82 kann die Aufzeichnung des Reinigungspfades 68 unterbrochen werden.

Wie eingangs erläutert ist erfindungsgemäß vorgesehen, dass in dem Reinigungspfad 68 positionsbezogen mindestens ein Reinigungsereignis, welches insbesondere die mindestens eine Reinigungseinheit 26 betrifft, und/oder mindestens ein Interaktionsereignis gespeichert werden kann. Vorzugsweise besteht die Möglichkeit, diese Ereignisse auch beim Einlern-Betriebsmodus an der Anzeigeeinheit 60 darzustellen. Dies ist in den Figuren 3 und 4 gezeigt. Ereignisse sind an der Anzeigeeinheit 60 im vorliegenden Beispiel über Markerelemente 84 dargestellt, die zum Beispiel mit einem Text zur Erläuterung für die Bedienperson 66 versehen sein können.

Ausgehend von einem Startpunkt 86 ist das Bodenreinigungsgerät 10 in der Umgebung 18 zunächst über einen verhältnismäßig frei von Hindernissen ausgebildeten Bereich bis zu einem verengten Bereich 88 bewegt worden. Zur Warnung der Umgebung 18 hat die Bedienperson 66 über das Betätigungselement 76 ein Interaktionsereignis der Hinweiseinheit 48 ausgelöst, das im Reinigungspfad 68 gespeichert wird. Das Interaktionsereignis ist positionsbezogen mit dem Bezugszeichen 90 dargestellt.

Die Reinigung der Bodenfläche 16 hat nach einer anfänglichen Leerfahrt dadurch begonnen, dass die Bedienperson 66 die Reinigungseinheiten 26 über die Bedienelemente 73 bis 75 aktiviert hat (Reinigungsereignis 92). Ein Symbol 94 kennzeichnet die gegenwärtige Position des Bodenreinigungsgerätes 10 innerhalb der Umgebung 18 führend am Reinigungspfad 68.

Die Darstellung der Karte 70 ermöglicht es der Bedienperson 66 festzustellen, welche Abschnitte der Bodenfläche 16 noch nicht befahren worden sind. Hierauf basierend wird die Bedienperson 66 unterstützt, den Reinigungspfad 68 zu erstellen. Noch unbefahrene Bereiche können gezielt angefahren werden. Bahnen des Reinigungspfades 68 können zum Zweck einer flächendeckenden Reinigung nebeneinandergelegt werden, wobei gleichzeitig ein möglichst geringer Überlapp erzielt werden kann. Eine randnahe oder hindernisnahe Reinigung wird durch die Darstellung ebenfalls unterstützt.

Reinigungsereignisse und Interaktionsereignisse, die von der Bedienperson 66 während des Einlernens ausgelöst wurden, sind als Bestandteil des Reinigungspfades 68 gespeichert, zusammen mit dem abgefahrenen Fahrweg.

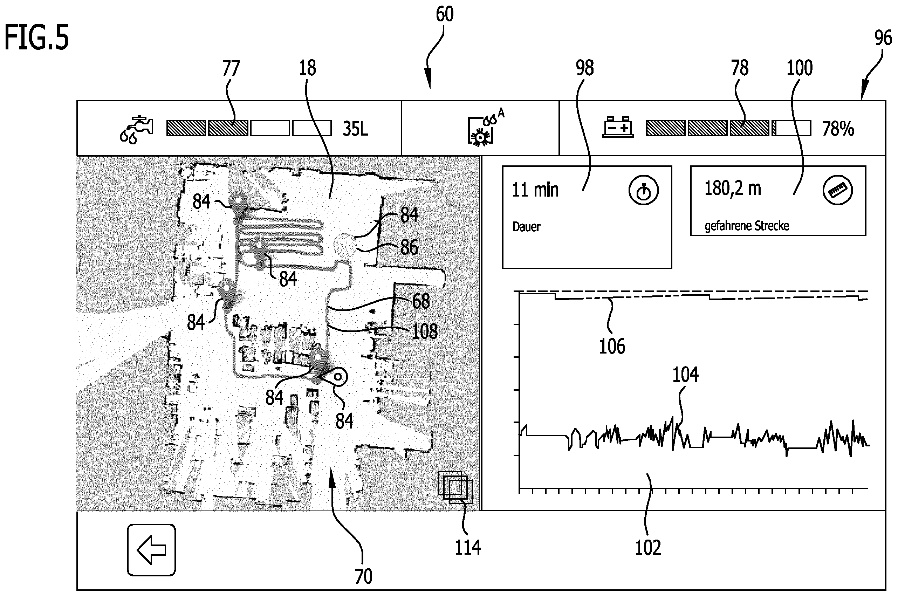

Bei einer selbsttätigen Reinigung unter Abfahren des Reinigungspfades 68 werden die Ereignisse vom Bodenreinigungsgerät 10 wie von der Bedienperson 66 vorgegeben positionsbezogen ausgelöst. Darüber hinaus kann der Reinigungspfad 68 einschließlich Ereignissen nach Abschluss der Reinigung und vorzugsweise auch während der Reinigung an der Anzeigeeinheit 60 dargestellt werden, worauf nachfolgend unter Verweis auf die Figuren 5 bis 9 eingegangen wird. Vorzugsweise kann nach Abschluss der Reinigung ein Reinigungsbericht erstellt und in der Speichereinheit 46 gespeichert werden, anhand dessen das Reinigungsergebnis kontrolliert werden kann.

Das nachfolgende Beispiel wird anhand eines Reinigungspfades 68 erläutert, der sich vom Reinigungspfad 68 gemäß der Figuren 3 und 4 unterscheidet. Entsprechendes gilt für die Umgebung 18 und damit die Karte 70. Der Unterschied zwischen den Reinigungspfaden 68 dient vorliegend zur Erläuterung, dass unterschiedliche Reinigungspfade angelernt und abgearbeitet werden können.

Die Darstellung des Reinigungsberichts 96 an der Anzeigeeinheit 60 gemäß Figur 5 umfasst eine Anzeige der Karte 70 mit dem darin gezeigten Reinigungspfad 68 sowie vorzugsweise optional und vom Bediener anzeigbare oder ausblendbare Markerelemente 84.

Darüber hinaus sind die Anzeigeelemente 77 und 78 gezeigt, ein Anzeigeelement 98 mit Informationen über die Fahrzeit und ein Anzeigeelement 100 mit Informationen über die zurückgelegte Wegstrecke. Ein Anzeigeelement 102 kann beispielsweise zeitabhängig einen Verlauf 104 der verbleibenden Wassermenge und einen Verlauf 106 der verbleibenden Batteriekapazität darstellen.

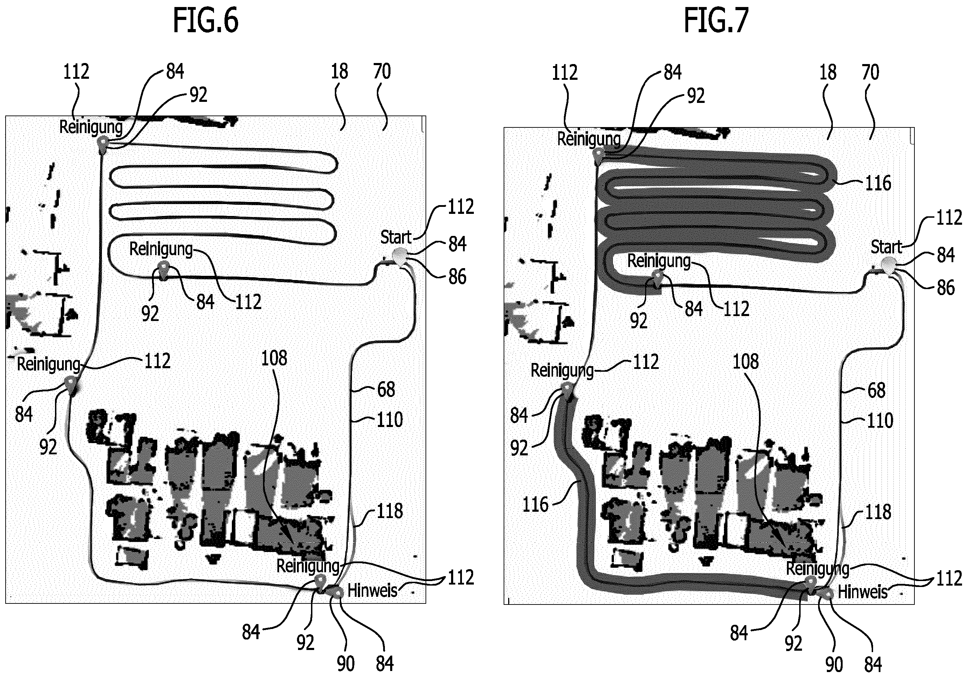

Wie insbesondere anhand der Figuren 6 bis 9 ersichtlich ist, wurde beim Reinigungspfad 68 mehrere Ereignisse ausgelöst, basierend auf der vorangegangenen Einspeicherung.

Ausgehend von einem Startpunkt 86 ist zunächst eine Leerfahrt erfolgt. Beim Umfahren eines Hindernisses 108 wurde ein Interaktionsereignis 90 zum Warnen von Personen in der Umgebung 18 ausgelöst. An derselben Stelle wurde ein Reinigungsereignis 92 ausgelöst, bei dem die Reinigungseinheiten 26 in Betrieb genommen sind. Ein weiteres Reinigungsereignis 92 wurde ausgelöst, wobei die Reinigungseinheiten 26 außer Betrieb gesetzt worden sind.

Nach einer darauffolgenden Leerfahrt wurde ein weiteres Reinigungsereignis 92 ausgelöst, bei dem die Reinigungseinheiten 26 wieder in Betrieb genommen worden sind. An einem weiteren Reinigungsereignis 92 wurden die Reinigungseinheiten 26 außer Betrieb gesetzt. Die Fahrt zum Endpunkt, der im vorliegenden Beispiel dem Startpunkt 86 entspricht, erfolgte als Leerfahrt.

Die Ereignisse und deren Kennzeichnung können von der Bedienperson 66 wahlweise an der Anzeigeeinheit 60 angezeigt und dabei zum Beispiel dem Fahrweg 110 überblendet oder neben diesem gezeigt werden. Die Anzeige kann über die Markerelement 84 hinaus beispielsweise eine Erläuterung 112 des jeweiligen Ereignisses umfassen.

Der jeweilige Anzeigemodus kann von der Bedienperson 66 ausgewählt werden. Zu diesem Zweck kann an der Anzeigeeinheit 60 zum Beispiel ein entsprechendes Bedienelement 114 ausgewählt werden. Über das Bedienelement 114 können vorzugsweise virtuelle Schichten (Layer), die unterschiedliche Informationen über die Reinigungsereignisse und/oder Interaktionsereignisse aufweisen, selektiv angezeigt oder ausgeblendet werden.

Insbesondere ist die Möglichkeit gegeben darzustellen, welche Reinigungseinheit 26 an welchen Abschnitten des Reinigungspfades 68 aktiviert war. Die Darstellung erfolgt zum Beispiel in einer Hervorhebung des Reinigungspfades 68 oder am Reinigungspfad 68. Die Hervorhebung kann eine Einfärbung umfassen.

Figur 7 stellt durch eine Hervorhebung 116 dar, auf welchem Abschnitt des Reinigungspfades 68 der Bodenreinigungskopf 28 eingeschaltet war. Darüber hinaus ist dargestellt, welcher Abschnitt der Bodenfläche 16 vom Bodenreinigungskopf 28 erfasst wurde.

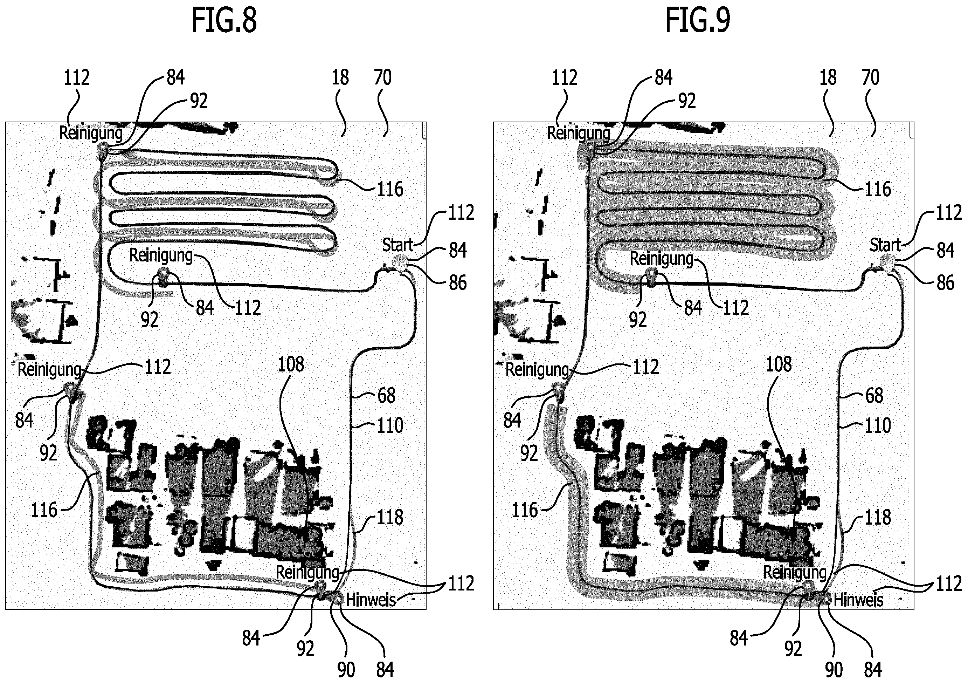

Figur 8 zeigt den entsprechenden Sachverhalt für den Seitenbesen 30 durch eine Hervorhebung 116. Dabei ist ebenfalls erkennbar, welcher Abschnitt der Bodenfläche 16 vom Seitenbesen 30 erfasst wurde.

Figur 9 zeigt durch eine Hervorhebung 116, an welchen Abschnitten des Reinigungspfades 68 das Saugaggregat 34 in Betrieb war.

Die Beispiele der Figuren 7 bis 9 zeigen, dass an den jeweiligen Reinigungsereignissen 92 jeweils der Bodenreinigungskopf 28, der Seitenbesen 30 und das Saugaggregat 34 zum gleichen Zeitpunkt aktiviert und deaktiviert wurden. Vorgesehen sein kann selbstverständlich, dass je nach Anlernen, die Ereignisse von der Bedienperson 66 für verschiedenartige Reinigungseinheiten 26 zu unterschiedlichen Zeitpunkten ausgelöst werden.

Anhand der Figuren 6 bis 9 ist ferner erkennbar, dass zwischen dem eingelernten Reinigungspfad 68 und dem abgearbeiteten Reinigungspfad 68 eine Abweichung 118 vorlag, bei der das Bodenreinigungsgerät 10 vom vorgegebenen Reinigungspfad 68 abgewichen ist. Die Abweichung 118 kann zum Beispiel auf ein Ausweichmanöver des Bodenreinigungsgerätes 10 zurückzuführen, um ein Hindernis zu umfahren. Bei Häufung von Abweichungen und/oder besonders großen Abweichungen kann die Bedienperson 66 gegebenenfalls Änderungen am Reinigungspfad 68 vornehmen, einen neuen Reinigungspfad anlernen und/oder das Bodenreinigungsgerät 10 warten.

Vorgesehen sein kann, dass eine Geschwindigkeit des Bodenreinigungsgerätes 10 im Reinigungspfad 68 angezeigt wird. Zum Beispiel ist die Geschwindigkeit des Bodenreinigungsgerätes 10 anhand einer Einfärbung des Fahrwegs 110 erkennbar.

Figur 10 zeigt das Bodenreinigungssystem 14 mit Anzeigeeinheiten 120, 122 sowie Speichereinheiten 124, 126. Beispielhaft ist die Anzeigeeinheit 120 als Anzeigeeinheit einer Datenverarbeitungseinrichtung 128 gezeigt, bei der es sich um einen Cloud-Dienst handeln kann. Die Datenverarbeitungseinrichtung 128 umfasst ferner die Speichereinheit 124.

Ein portables Zusatzgerät 130, beispielsweise ein Smartphone oder ein Tablet-Computer, umfasst die Anzeigeeinheit 122 und die Speichereinheit 126.

Bildinformationen, zum Beispiels als Bestandteil des Reinigungsberichtes 96, können vom Bodenreinigungsgerät 10 über die Kommunikationseinheit 54 zur Anzeige an den Anzeigeeinheiten 120 und/oder 122 übertragen werden. Dies bietet sich insbesondere zum Betrachten und Auswerten von Reinigungsberichten 96 an. Reinigungsberichte 96 können beispielsweise in den Speichereinheiten 124, 126 gespeichert werden.

In den Speichereinheiten 124, 126 können vorzugsweise Reinigungspfade 68 gespeichert werden, wobei diesbezügliche Daten über die Kommunikationseinheit 54 ans Bodenreinigungsgerät 10 übertragen werden können. Umgekehrt können Informationen vom Bodenreinigungsgerät 10 in den Speichereinheiten 124, 126 gespeichert werden, beispielsweise beim Anlernen von Reinigungspfaden 68.

### Bezugszeichenliste

10 Bodenreinigungsgerät
12, 14 Bodenreinigungssystem
16 Bodenfläche
18 Umgebung
20 Gehäuse
22 Fahrwerk
24 Steuereinheit
26 Reinigungseinheit
28 Bodenreinigungskopf
30 Seitenbesen
32 Saugleiste
34 Saugaggregat
36, 38 Vorratsbehälter
40 Schmutzflüssigkeitsbehälter
42 Batterie
44 Sensoreinheit
46 Speichereinheit
48 Hinweiseinheit
50, 52 Aktor
54 Kommunikationseinheit
56 Bedieneinheit
58 Vorwärtsrichtung
60 Anzeigeeinheit
62 gestrichelte Linie
64 Touchscreen
66 Bedienperson
67 Griffelement
68 Reinigungspfad
70 Karte
72, 73, 74, 75, 76 Bedienelement
77, 78, 79, 80 Anzeigeelement
81, 82 Betätigungselement
84 Markerelement
86 Startpunkt
88 verengter Bereich
90 Interaktionsereignis
92 Reinigungsereignis
94 Symbol
96 Reinigungsbericht
98, 100, 102 Anzeigeelement
104, 106 Verlauf
108 Hindernis
110 Fahrweg
112 Erläuterung
114 Bedienelement
116 Hervorhebung
118 Abweichung
120, 122 Anzeigeeinheit
124, 126 Speichereinheit
128 Datenverarbeitungseinrichtung
130 Zusatzgerät

## Patentansprüche

1. Bodenreinigungssystem, umfassend
ein selbstfahrendes und selbstlenkendes Bodenreinigungsgerät (10), insbesondere ausgestaltet als Scheuersaugmaschine, zum Reinigen einer Bodenfläche (16),
mindestens eine ansteuerbare Anzeigeeinheit (60, 120, 122),
und mindestens eine Speichereinheit (46, 124, 126),
wobei das Bodenreinigungsgerät (10)
ein Fahrwerk (22) zum Verfahren auf einer Bodenfläche (16), eine Steuereinheit (24), eine Sensoreinheit (44), mindestens eine Reinigungseinheit (26) und eine Bedieneinheit (56) umfasst,
wobei mittels der Sensoreinheit (44) eine Umgebung zum Lokalisieren und/oder Navigieren des Bodenreinigungsgerätes (10) erfassbar ist, insbesondere während der Bewegung,
wobei in der mindestens einen Speichereinheit (46, 124, 126) mindestens ein Reinigungspfad (68) auf der Bodenfläche (16) speicherbar oder gespeichert ist,
wobei das Bodenreinigungsgerät (10) ausgebildet und eingerichtet ist, unter Führung einer Bedienperson (66) an der Bedieneinheit (56) in einem Einlern-Betriebsmodus einen in der Speichereinheit (46, 124, 126) speicherbaren Reinigungspfad (68) zu erstellen,
und wobei im Reinigungspfad (68) positionsbezogen mindestens ein Reinigungsereignis (92) insbesondere betreffend die mindestens eine Reinigungseinheit (26) und/oder mindestens ein Interaktionsereignis (90) betreffend eine Interaktion des Bodenreinigungsgerätes (10) mit der Umgebung (18) speicherbar oder gespeichert ist,
wobei der Reinigungspfad (68) verknüpft mit dem mindestens einen Reinigungsereignis (92) und/oder dem mindestens einen Interaktionsereignis (90) an der mindestens einen Anzeigeeinheit (60, 120, 122) darstellbar ist,
und wobei von der Steuereinheit (24) ein zuvor gespeicherter Reinigungspfad (68) zusammen mit dem bei dem Reinigungsvorgang tatsächlich absolvierten Reinigungspfad (68) darstellbar ist, wobei etwaige Abweichungen (118) zwischen den Reinigungspfaden (68) an der Anzeigeeinheit (60, 120, 122) visualisierbar sind.

2. Bodenreinigungssystem nach Anspruch 1, **dadurch gekennzeichnet, dass** der Reinigungspfad (68) während der Führung des Bodenreinigungsgerätes (10) durch die Bedienperson (66) im Einlern-Betriebsmodus an der mindestens einen Anzeigeeinheit (60, 120, 122) darstellbar ist.

3. Bodenreinigungssystem nach Anspruch 1 oder 2, **dadurch gekennzeichnet, dass** die Bedieneinheit (56) mindestens ein Bedienelement (72, 73, 74, 75, 76) umfasst zum Auslösen des mindestens einen Reinigungsereignisses (92) und/oder des mindestens einen Interaktionsereignisses (90) durch die Bedienperson (66) im Einlern-Betriebsmodus.

4. Bodenreinigungssystem nach einem der voranstehenden Ansprüche, **dadurch gekennzeichnet, dass** an der mindestens einen Anzeigeeinheit (60, 120, 122) eine Karte (70) der Umgebung (18) darstellbar ist und dass der Reinigungspfad (68) in der Karte (70) darstellbar ist.

5. Bodenreinigungssystem nach einem der voranstehenden Ansprüche, **dadurch gekennzeichnet, dass** das mindestens eine Reinigungsereignis (92) zumindest eines der Folgenden ist:
- Einschalten oder Ausschalten eines Reinigungsbetriebs;
- Einschalten, Ausschalten und/oder Ändern des Betriebszustandes mindestens einer Reinigungseinheit (26);
- Einschalten, Ausschalten und/oder Ändern eines Reinigungsmodus des Bodenreinigungsgerätes (10);
- Einstellen einer Dosierung einer Reinigungsflüssigkeit und/oder einer Reinigungschemikalie;
- Einstellen und/oder Ändern einer Verfahrgeschwindigkeit des Bodenreinigungsgerätes (10) auf der Bodenfläche (16), insbesondere während der Reinigung der Bodenfläche (16).

6. Bodenreinigungssystem nach einem der voranstehenden Ansprüche, **dadurch gekennzeichnet, dass** der Reinigungspfad (68) bei einem und/oder nach Abschluss eines vom Bodenreinigungsgerät (10) selbsttätig durchgeführten Reinigungsvorgangs unter Abfahren eines zuvor gespeicherten Reinigungspfades (68) darstellbar ist.

7. Bodenreinigungssystem nach einem der voranstehenden Ansprüche, **dadurch gekennzeichnet, dass** nach Abschluss des Reinigungsvorgangs ein Reinigungsbericht (96) erstellbar ist und in der mindestens einen Speichereinheit (46, 124, 126) speicherbar ist, wobei der Reinigungspfad (68) Bestandteil des Reinigungsberichts (96) ist.

8. Bodenreinigungssystem nach einem der voranstehenden Ansprüche, **dadurch gekennzeichnet, dass** von der Steuereinheit (24) eine Übereinstimmung des tatsächlich absolvierten Reinigungspfades (68) mit dem zuvor gespeicherten Reinigungspfad (68) berechenbar ist.

9. Bodenreinigungssystem nach einem der voranstehenden Ansprüche, **dadurch gekennzeichnet, dass** der Reinigungspfad (68) an der Anzeigeeinheit (60, 120, 122) derart darstellbar ist, dass das mindestens eine Reinigungsereignis (92) und/oder das mindestens eine Interaktionsereignis (90) wahlweise anzeigbar ist.

10. Bodenreinigungssystem nach einem der voranstehenden Ansprüche, **dadurch gekennzeichnet, dass** der Reinigungspfad (68) an der Anzeigeeinheit (60, 120, 122) derart darstellbar ist, dass zumindest eines der Folgenden hervorgehoben ist:
- ein Abschnitt des Reinigungspfades (68), entlang dem ein Reinigungsbetrieb durchgeführt wird oder wurde;
- ein Abschnitt des Reinigungspfades (68), entlang dem mindestens eine Reinigungseinheit (26) in Betrieb ist oder war.

11. Bodenreinigungssystem nach einem der voranstehenden Ansprüche, **dadurch gekennzeichnet, dass** der Reinigungspfad (68) an der Anzeigeeinheit (60, 120, 122) derart darstellbar ist, dass ein von der mindestens einen Reinigungseinheit (26) erfasster Bereich der Bodenfläche (16) hervorgehoben ist.

12. Bodenreinigungssystem nach einem der voranstehenden Ansprüche, **dadurch gekennzeichnet, dass** mindestens eine Anzeigeeinheit (60, 120, 122) eine berührungssensitive Anzeigeeinheit (60, 120, 122) ist.

13. Bodenreinigungssystem nach einem der voranstehenden Ansprüche, **dadurch gekennzeichnet, dass** der Reinigungspfad (68) an der Anzeigeeinheit (60, 120, 122) vergrößerbar und/oder verkleinerbar darstellbar ist.

14. Bodenreinigungssystem nach einem der voranstehenden Ansprüche, **dadurch gekennzeichnet, dass** das Bodenreinigungsgerät (10) mindestens eine Anzeigeeinheit (60, 120, 122) umfasst und/oder dass mindestens eine Anzeigeeinheit (60, 120, 122) räumlich entfernt vom Bodenreinigungsgerät (10) positioniert ist, wobei Bildinformationen vom Bodenreinigungsgerät (10) über eine Kommunikationseinheit (54) an die Anzeigeeinheit (60, 120, 122) übertragbar sind, insbesondere dass das Bodenreinigungssystem (14) eine Datenverarbeitungseinrichtung (128) umfasst, die die Anzeigeeinheit (60, 120, 122) aufweist.

15. Bodenreinigungssystem nach einem der voranstehenden Ansprüche, **dadurch gekennzeichnet, dass** das Bodenreinigungsgerät (10) mindestens eine Speichereinheit (46, 124, 126) umfasst und/oder dass mindestens eine Speichereinheit (46, 124, 126) räumlich entfernt vom Bodenreinigungsgerät (10) positioniert ist, wobei zu speichernde oder gespeicherte Informationen über eine Kommunikationseinheit (54) vom Bodenreinigungsgerät (10) an die Speichereinheit (46, 124, 126) und/oder umgekehrt übertragbar sind, insbesondere dass das Bodenreinigungssystem (10) eine Datenverarbeitungseinrichtung (128) umfasst, die die Speichereinheit (46, 124, 126) aufweist.

16. Bodenreinigungsgerät eines erfindungsgemäßen Bodenreinigungssystems nach einem der Ansprüche 1 bis 15.

17. Verfahren zum Betreiben eines Bodenreinigungssystems nach einem der Ansprüche 1 bis 15 oder eines Bodenreinigungsgerätes nach Anspruch 16, wobei der Reinigungspfad verknüpft mit dem mindestens einen Reinigungsereignis und/oder dem mindestens einen Interaktionsereignis an der mindestens einen Anzeigeeinheit dargestellt wird, und wobei von der Steuereinheit ein zuvor gespeicherter Reinigungspfad zusammen mit dem bei dem Reinigungsvorgang tatsächlich absolvierten Reinigungspfad dargestellt wird, wobei etwaige Abweichungen zwischen den Reinigungspfaden an der Anzeigeeinheit visualisiert werden.

## Claims

1. A floor cleaning system comprising:
a self-propelled and self-steering floor cleaning apparatus (10), in particular designed as scrubber vacuum, for cleaning a floor surface (16);
at least one controllable display unit (60, 120, 122);
and at least one storage unit (46, 124, 126),
wherein the floor cleaning apparatus (10)
comprises a running gear (22) for traveling on a floor surface (16), a control unit (24), a sensor unit (44), at least one cleaning unit (26), and an operating unit (56), wherein surroundings are detectable by means of the sensor unit (44) in order to locate and/or navigate the floor cleaning apparatus (10), in particular during movement,
wherein at least one cleaning path (68) on the floor surface (16) is storable or stored in the at least one storage unit (46, 124, 126),
wherein the floor cleaning apparatus (10) is designed and configured to create a cleaning path (68), which is storable in the storage unit (46, 124, 126), in a teaching mode of operation while being guided by an operator (66) at the operating unit (56),
and wherein at least one cleaning event (92) relating in particular to the at least one cleaning unit (26), and/or at least one interaction event (90) relating to an interaction of the floor cleaning apparatus (10) with the surroundings (18) is storable or stored in the cleaning path (68) in a position-specific manner,
wherein the cleaning path (68) is displayable on the at least one display unit (60, 120, 122) in a manner that is associated with the at least one cleaning event (92) and/or the at least one interaction event (90),
and wherein a previously stored cleaning path (68) together with the cleaning path (68) actually covered during the cleaning process is displayable by the control unit (24), wherein any deviations (118) between the cleaning paths (68) are visualizable on the display unit (60, 120, 122).

2. The floor cleaning system in accordance with claim 1, **characterized in that** the cleaning path (68) is displayable on the at least one display unit (60, 120, 122) while the floor cleaning apparatus (10) is being guided by the operator (66) in the teaching mode of operation.

3. The floor cleaning system in accordance with claim 1 or 2, **characterized in that** the operating unit (56) comprises at least one operating element (72, 73, 74, 75, 76) for triggering the at least one cleaning event (92) and/or the at least one interaction event (90) by the operator (66) in the teaching mode of operation.

4. The floor cleaning system in accordance with any one of the preceding claims, **characterized in that** a map (70) of the surroundings (18) is displayable on the at least one display unit (60, 120, 122), and **in that** the cleaning path (68) is displayable in the map (70).

5. The floor cleaning system in accordance with any one of the preceding claims, **characterized in that** the at least one cleaning event (92) is at least one of the following:
- switching on or off a cleaning operation;
- switching on, switching off, and/or changing the operating state of at least one cleaning unit (26);
- switching on, switching off, and/or changing a cleaning mode of the floor cleaning apparatus (10);
- setting a dosing of a cleaning liquid and/or of a cleaning chemical;
- setting and/or changing a traveling speed of the floor cleaning apparatus (10) on the floor surface (16), in particular during cleaning of the floor surface (16).

6. The floor cleaning system in accordance with any one of the preceding claims, **characterized in that** the cleaning path (68) is displayable during and/or upon completion of a cleaning process automatically carried out by the floor cleaning apparatus (10), while covering a previously stored cleaning path (68).

7. The floor cleaning system in accordance with any one of the preceding claims, **characterized in that**, after completion of the cleaning process, a cleaning report (96) is creatable and is storable in the at least one storage unit (46, 124, 126), wherein the cleaning path (68) is part of the cleaning report (96).

8. The floor cleaning system in accordance with any one of the preceding claims, **characterized in that** a match between the actually covered cleaning path (68) and the previously stored cleaning path (68) is calculable by the control unit (24).

9. The floor cleaning system in accordance with any one of the preceding claims, **characterized in that** the cleaning path (68) is displayable on the display unit (60, 120, 122) in a manner such that the at least one cleaning event (92) and/or the at least one interaction event (90) is optionally displayable.

10. The floor cleaning system in accordance with any one of the preceding claims, **characterized in that** the cleaning path (68) is displayed on the display unit (60, 120, 122) in a manner such that at least one of the following is highlighted:
- a section of the cleaning path (68) along which a cleaning operation is or was performed;
- a section of the cleaning path (68) along which at least one cleaning unit (26) is or was in operation.

11. The floor cleaning system in accordance with any one of the preceding claims, **characterized in that** the cleaning path (68) is displayable on the display unit (60, 120, 122) in a manner such that a region of the floor surface (16) covered by the at least one cleaning unit (26) is highlighted.

12. The floor cleaning system in accordance with any one of the preceding claims, **characterized in that** at least one display unit (60, 120, 122) is a touch-sensitive display unit (60, 120, 122).

13. The floor cleaning system in accordance with any one of the preceding claims, **characterized in that** the cleaning path (68) is displayable on the display unit (60, 120, 122) in an enlarged and/or reduced manner.

14. The floor cleaning system in accordance with any one of the preceding claims, **characterized in that** the floor cleaning apparatus (10) comprises at least one display unit (60, 120, 122) and/or **in that** at least one display unit (60, 120, 122) is positioned remote from the floor cleaning apparatus (10), wherein image information are transmittable from the floor cleaning apparatus (10) to the display unit (60, 120, 122) via a communication unit (54), in particular **in that** the floor cleaning system (14) comprises a data processing device (128) which has the display unit (60, 120, 122).

15. The floor cleaning system in accordance with any one of the preceding claims, **characterized in that** the floor cleaning apparatus (10) comprises at least one storage unit (46, 124, 126) and/or **in that** at least one storage unit (46, 124, 126) is positioned remote from the floor cleaning apparatus (10), wherein information that is to be stored or is stored is transmittable from the floor cleaning apparatus (10) to the storage unit (46, 124, 126) and/or vice versa via a communication unit (54), in particular **in that** the floor cleaning system (10) comprises a data processing device (128) which has the storage unit (46, 124, 126).

16. A floor cleaning apparatus of a floor cleaning system in accordance with the invention in accordance with any one of claims 1 to 15.

17. A method for operating a floor cleaning system in accordance with any one of claims 1 to 15 or of a floor cleaning apparatus according to claim 16, wherein the cleaning path is displayed on the at least one display unit in a manner that is associated with the at least one cleaning event and/or the at least one interaction event, and wherein a previously stored cleaning path together with the cleaning path actually covered during the cleaning process is displayable by the control unit, wherein any deviations between the cleaning paths are visualized on the display unit.

## Revendications

1. Système de nettoyage de sols, comprenant
un appareil de nettoyage de sols (10) autopropulsé et autoguidé, en particulier conçu comme une autolaveuse, pour nettoyer une surface de sol (16),
au moins une unité d'affichage contrôlable (60, 120, 122),
et au moins une unité de mémoire (46, 124, 126),
l'appareil de nettoyage de sols (10)
comprenant un train de roulement (22) pour le déplacement sur une surface de sol (16), une unité de commande (24), une unité de capteur (44), au moins une unité de nettoyage (26) et une unité de contrôle (56), dans lequel l'unité de capteur (44) permet de détecter un environnement pour la localisation et/ou la navigation de l'appareil de nettoyage de sols (10), plus particulièrement pendant le déplacement,
dans lequel, dans l'au moins une unité de mémoire (46, 124, 126), il est possible d'enregistrer ou est enregistré au moins un trajet de nettoyage (68) sur la surface de sol (16),
dans lequel l'appareil de nettoyage de sols (10) est conçu et configuré pour effectuer, sous le guidage d'un opérateur (66) au niveau de l'unité de contrôle (56), dans un mode d'apprentissage, un trajet de nettoyage (68) pouvant être enregistré dans l'unité de mémoire (46, 124, 126),
et dans lequel, en fonction de la position, au moins un événement de nettoyage (92) concernant plus particulièrement l'au moins une unité de nettoyage (26) et/ou au moins un événement d'interaction (90) concernant une interaction de l'appareil de nettoyage de sols (10) avec l'environnement (18), peut être enregistré ou est enregistré dans le trajet de nettoyage (68),
dans lequel le trajet de nettoyage (68) peut être représenté de manière combinée avec l'au moins un événement de nettoyage (92) et/ou l'au moins un événement d'interaction (90), sur l'au moins une unité d'affichage (60, 120, 122), et
dans lequel l'unité de commande (24) permet de représenter un trajet de nettoyage (68) préalablement enregistré conjointement avec le trajet de nettoyage (68) effectivement parcouru lors de l'opération de nettoyage, d'éventuelles divergences (118) entre les trajets de nettoyage (68) étant visualisables sur l'unité d'affichage (60, 120, 122).

2. Système de nettoyage de sols selon la revendication 1, **caractérisé en ce que** le trajet de nettoyage (68), en mode d'apprentissage, peut être représenté sur l'au moins une unité d'affichage (60, 120, 122) pendant le guidage de l'appareil de nettoyage de sols (10) par l'opérateur (66).

3. Système de nettoyage de sols selon la revendication 1 ou 2, **caractérisé en ce que** l'unité de contrôle (56) comprend au moins un élément de contrôle (72, 73, 74, 75, 76) pour déclencher au moins un événement de nettoyage (92) et/ou au moins un événement d'interaction (90) par l'opérateur (66) en mode d'apprentissage.

4. Système de nettoyage de sols selon l'une des revendications précédentes, **caractérisé en ce qu'**une carte (70) de l'environnement (18) peut être représentée sur l'au moins une unité d'affichage (60, 120, 122) et que le trajet de nettoyage (68) peut être représenté sur la carte (70).

5. Système de nettoyage de sols selon l'une des revendications précédentes, **caractérisé en ce qu'**au moins une des affirmations suivantes s'applique à un événement de nettoyage (92) :
- mise en marche ou arrêt du mode de nettoyage ;
- mise en marche, arrêt et/ou modification de l'état de fonctionnement d'au moins une unité de nettoyage (26) ;
- mise en marche, arrêt et/ou modification du mode de nettoyage de l'appareil de nettoyage de sols (10) ;
- réglage du dosage d'un liquide de nettoyage et/ou d'un produit chimique de nettoyage ;
- réglage et/ou modification d'une vitesse de déplacement de l'appareil de nettoyage de sols (10) sur la surface de sol (16), en particulier pendant le nettoyage de la surface de sol (16).

6. Système de nettoyage de sols selon l'une des revendications précédentes, **caractérisé en ce que** le trajet de nettoyage (68) peut être représenté lors et/ou après l'achèvement d'une opération de nettoyage effectuée automatiquement par l'appareil de nettoyage de sols (10) en suivant un trajet de nettoyage (68) préalablement enregistré.

7. Système de nettoyage de sols selon l'une des revendications précédentes, **caractérisé en ce qu'**un rapport de nettoyage (96) peut être généré après l'achèvement de l'opération de nettoyage et peut être enregistré dans l'au moins une unité de mémoire (46, 124, 126), le trajet de nettoyage (68) faisant partie du rapport de nettoyage (96).

8. Système de nettoyage de sols selon l'une des revendications précédentes, **caractérisé en ce que** l'unité de commande (24) permet de calculer une concordance du trajet de nettoyage (68) effectivement parcouru avec le trajet de nettoyage (68) préalablement enregistré.

9. Système de nettoyage de sols selon l'une des revendications précédentes, **caractérisé en ce que** le trajet de nettoyage (68) peut être représenté sur l'unité d'affichage (60, 120, 122) de telle sorte que l'au moins un événement de nettoyage (92) et/ou l'au moins un événement d'interaction (90) peuvent être représentés de manière sélective.

10. Système de nettoyage de sols selon l'une des revendications précédentes, **caractérisé en ce que** le trajet de nettoyage (68) peut être représenté sur l'unité d'affichage (60, 120, 122) de telle sorte qu'au moins l'un des éléments suivants est mis en relief :
- une section du trajet de nettoyage (68) le long de laquelle une opération de nettoyage est effectuée ou a été effectuée ;
- une section du trajet de nettoyage (68) le long de laquelle au moins une unité de nettoyage (26) est ou a été en fonctionnement.

11. Système de nettoyage de sols selon l'une des revendications précédentes, **caractérisé en ce que** le trajet de nettoyage (68) peut être représenté sur l'unité d'affichage (60, 120, 122) de telle sorte qu'une zone de la surface de sol (16) couverte par l'au moins une unité de nettoyage (26) est mise en relief.

12. Système de nettoyage de sols selon l'une des revendications précédentes, **caractérisé en ce qu'**au moins une unité d'affichage (60, 120, 122) est une unité d'affichage tactile (60, 120, 122).

13. Système de nettoyage de sols selon l'une des revendications précédentes, **caractérisé en ce que** le trajet de nettoyage (68) peut être représenté sur l'unité d'affichage (60, 120, 122) de manière agrandissable et/ou réductible.

14. Système de nettoyage de sols selon l'une des revendications précédentes, **caractérisé en ce que** l'appareil de nettoyage de sols (10) comprend au moins une unité d'affichage (60, 120, 122) et/ou qu'au moins une unité d'affichage (60, 120, 122) est positionnée à distance de l'appareil de nettoyage de sols (10), des informations d'image pouvant être transmises de l'appareil de nettoyage de sols (10) à l'unité d'affichage (60, 120, 122) via une unité de communication (54), en particulier **en ce que** le système de nettoyage de sols (14) comprend un dispositif de traitement de données (128) qui comporte l'unité d'affichage (60, 120, 122).

15. Système de nettoyage de sols selon l'une des revendications précédentes, **caractérisé en ce que** l'appareil de nettoyage de sols (10) comprend au moins une unité de mémoire (46, 124, 126) et/ou qu'au moins une unité de mémoire (46, 124, 126) est positionnée à distance de l'appareil de nettoyage de sols (10), des informations à mémoriser ou enregistrées pouvant être transmises via une unité de communication (54) de l'appareil de nettoyage de sols (10) à l'unité de mémoire (46, 124, 126) et/ou inversement, en particulier **en ce que** le système de nettoyage de sols (10) comprend un dispositif de traitement de données (128) qui comporte l'unité de mémoire (46, 124, 126).

16. Appareil de nettoyage de sols d'un système de nettoyage de sols selon l'une des revendications 1 à 15.

17. Procédé de fonctionnement d'un système de nettoyage de sols selon l'une des revendications 1 à 15 ou d'un appareil de nettoyage de sols selon la revendication 16, dans lequel le trajet de nettoyage est représenté de manière combinée avec l'au moins un événement de nettoyage et/ou l'au moins un événement d'interaction sur l'au moins une unité d'affichage, et un trajet de nettoyage préalablement enregistré est affiché par l'unité de contrôle conjointement avec le trajet de nettoyage effectivement parcouru lors de l'opération de nettoyage, d'éventuelles divergences entre les trajets de nettoyage étant visualisées sur l'unité d'affichage.
